# EUROPEAN PATENT SPECIFICATION

(11) **EP 1 102 488 B1**
(45) Date of publication and mention of the grant of the patent: **13.09.2006**
(21) Application number: 00309857.1
(22) Date of filing: 06.11.2000
(51) Int. Cl.: H04N 7/173

(54) **Method and apparatus for remote audiovisual signal recording**
Verfahren und Vorrichtung zur ferngesteuerten Aufnahme von audiovisuellen Signalen
Méthode et appareil pour l'enregistrement à distance de signaux audiovisuels

(30) Priority: 15.11.1999 US 440356
(43) Date of publication of application: 23.05.2001
(73) Proprietor: LUCENT TECHNOLOGIES INC., Murray Hill, New Jersey 07974-0636 (US)
(72) Inventor: Kocherlakota, Sitarama S., Naperville, IL 60564 (US)
(74) Representative: Sarup, David Alexander

(56) References cited:
- EP-A- 0 625 856
- WO-A-93/16557
- WO-A-99/04567

## Description

### Background of the Invention

This invention relates to the delivery of multi-media signals such as television to clients via computer networks such as the Internet. More particularly, the invention relates to method and apparatus for selectively receiving time scheduled signals from a plurality of sources and at the request of a client for delivering representations of the requested signals to the client with or without recordation and time shifting delay.

In the course of the following description, television signals are mentioned as a most common example but the signals could be any media signals such as broadcast FM, television or any other signals desired by a client. Also, the term "time scheduled signals" is employed to mean any type of signal the presentation of which is known but the control of the time of presentation is not generally controlled by the provider of services herein. Such time scheduled signals may include, broadcast television, broadcast FM, cable television and FM, satellite television and FM signals and closed circuit presentations.

The modem television and FM user has a wide array of possible signal sources available from which to choose. Such sources include standard broadcast television, cable network and satellite systems of many varieties. Each of these systems and others not named require a different type of receiver/decoder and most users have only one or two types of service which they can actually receive. Economically, the user - cannot afford to have access to all or even most of the sources of media programming. Further, even when a person can afford to own all of the equipment, much of it will be seldom used and thus not an economic value.

Cable television systems are an attempt to provide full media coverage to households by sharing the costs of receiving many types of signals and delivering those signals to users in a standard format. Although the costs of a cable system can be shared by many users, the bandwidth available for cable revenue is limited so the cable service providers decide on a general basis which media channels will be available to their subscribers. Thus the range of available programs is limited. What is needed in the art is a media delivery system which has shared usage so that many types of signal source formats can be afforded while permitting individual users to specifically request which media programs they want to receive at any given time.

Such a shared media program reception method and apparatus satisfies other needs in the art. Video tape recorder (VTR), which are often video cassette recorders (VCR), are common today and are present in many if not most households. The VTR itself includes many complex mechanical and electrical functions and is subject to many types of well-known failures. Without a back-up VTR at the user's home, a failure may prevent recording a desired program. With a VTR, a viewer can record from broadcast media and play the recording back at a later time. Although most modern VTRs enable some rather sophisticated procedures for recording selected future programs, it appears from the popular press that most households are not capable of using those procedures. The most common use of the VTR is to manually turn on the recording function at the time the program to be recorded is airing or to play prerecorded tapes. Systems such as VCR+ have been developed which simplify the operation needed for recording future programs but these normally add cost to the recording system and are still too complicated for use in many households. The result is that consumers have not achieved the television viewing freedom they might if recording were less expensive and easier to perform. -

Recently, products such as TiVo of Sunnyvale, California (www.TiVo.com) and Replay TV of Mountain View, California (www.ReplayTV.Com) have come into the market, providing a new way of recording broadcast programming at the viewer's location. These systems provide digital storage of incoming TV signals and an improved human/machine interface. Although some advantages are available with known digital storage systems, they still require a per viewing device, e.g. TV, receiver/decoder unit which is costly and subject to failures as are all non-duplicated consumer devices.

Patent Application WO-A-9904567 to Compton, published 28 January 1999 provides a plurality of media program signals, a plurality of media delivery devices, a server for receiving requests to store media programs from a client, selecting and converting apparatus for selecting and converting media program signals into a digital format and storage apparatus for storing the selected media program signals.

What is needed in the art is an improved broadcast media recording system which avoids per viewing device storage equipment and which provides a simplified human/machine interface.

### Summary of the Invention

The present invention is characterized over WO-A-9904567 in that recording request received by the server specifies a delivery format in which the client desires to receive the media program, the server validates membership of the client in a delivery service and the recording and replay system further comprises notifying apparatus responsive to the completion of storage of the specified media program by the storage apparatus for notifying the client of a computer network address specifying one of the media delivery devices and a data file of the storage apparatus storing the specified media program; and the media delivery device, being responsive to a delivery request including the notified computer network address from the client received via the computer network for transmitting the stored media program to the client via the computer network.

A system and method in accordance with the present invention, as defined in claim 1 and 6, provides broadcast media recording and/or deliver without per viewer location recording media and in so doing avoids the costs and complexity of prior systems. The control of the recording event and the delivery of the media is performed over a computer network such as the well known Internet.

The aforementioned problems are solved and an advance is achieved in accordance with the invention which is a method and apparatus for receiving time scheduled media programs and in response to a request from a client which is remote from the program reception, selecting a specified media program and delivering the selected program to the client via a digital network such as the Internet. An embodiment of the invention includes a delivery system connected to a plurality of media program sources and to one or more clients via the Internet. The media program sources may include cable television systems, satellite transmission systems, CCTV or other sources of media programming. With this wide array of media sources the client has access to ordinary television programming such as soap operas, movies and broadcast sporting events, and to more esoteric media programming such as corporate board meetings or instructional medical procedure programs via CCTV.

In an embodiment, the client contact the media reception and delivery system via the Internet and specifies which media program he or she would like to receive as well as a streaming video format and data rate at which the program should be sent to the client. The delivery system validates the client request and advises a scheduler portion of the delivery system of the desired program and the delivery format and data rate. The scheduler allocates a receiver to receive the specified media program and an encoder to convert the received program into requested video format. The scheduler begins the receiving and encoding at a time just prior to the scheduled "airing" of the requested media program.

The reception and delivery system may be distributed around the world so that a client may contact a reception and delivery server in one part of the world to control the storage of multimedia signals in another part. For example, a client in Chicago can submit a request for storage of a broadcast television cricket match in India. A reception and delivery system in India can respond to the request by storing the requested cricket match and distributing it to the client. Thus the client has an opportunity to record, view, and/or play back programs not normally accessible to the client.

The encoded media program is stored in digital format in a high speed-high capacity store. When the scheduled time for completion of the requested media program occurs, the reception and encoding stops and the delivery system prepares and sends an electronic mail (e-mail) message to the client identifying one of a plurality of program delivery devices and the address of the file storing the digitized media program. Advantageously, the e-mail to the client includes a URL which identifies both the delivery device and the file address. When the client wishes to receive the stored program he or she transmits on the Internet the URL obtained from the delivery system e-mail. The delivery device of the delivery system responds to the URL by reading the media program from storage and transmitting it to the client over the Internet in the - format requested by the client.

In another embodiment, the client may request substantially real time delivery of a requested media program. This delivery type would be used by clients who wish to gain access to programming which may not be otherwise available to the client. That is, the client may not otherwise have access to all of the program sources to which the delivery system is connected. When a client requests substantially real time delivery of a specified media program that program is selected from the sources and digitally encoded in a manner similar to the previously discussed embodiment. The client, however, is quickly notified of the URL of the media program file being stored and the start address of the file is adjusted when the client accesses it so that only a short time delay, such as 0.5 second to 10 minutes, is present between the file address being written and the file address being delivered to the client.

### Brief Description of the Drawings

A more complete understanding of the invention may be obtained from consideration of the following description in conjunction with the drawing, in which:
FIG. 1 is a block diagram of Internet connected apparatus for media program delivery to clients;
FIG. 2 is a block diagram of a delivery system shown in FIG. 1;
FIG. 3 represents a video screen presented to a client during membership sign-up;
FIG. 4 represents a video screen presented to a client for requesting delivery of a specific media program;
FIG. 5 is a flow diagram of the operation of the media delivery system;
FIG. 6 is a flow diagram of a storage routine of the media delivery system for time shifting recording;
FIG. 7 is a flow diagram of a storage routine of the media delivery system for "substantially real time" delivery; and
FIG. 8 is a block diagram of a distributed media delivery system comprising a plurality of media delivery units.

### Detailed Description

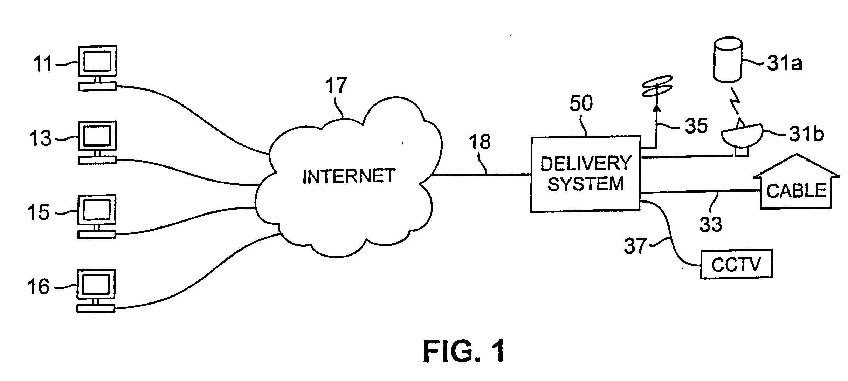

FIG. 1 shows a system for accepting requests for recording and/or presentation of media programming from a plurality of clients 11, 13, 15 and 16 and for delivering media programming to those clients. In FIG. 1, client 11 is connected to the Internet 17 via an analog modem and has a maximum data throughput of 56K bps. Client 13 is connected to the internet via an XDSL connection and has a data throughput of approximately 6M bps and client 15 is connected via a LAN and has a data throughput of 10 to 100 M bps. Lastly, client 16 is connected to the Internet via a cable modem. Although the Internet is used as a communication device in the present embodiment, the present method and apparatus could operate with any type of digital network.

The clients 11, 13, 15 and 16, which represent a large number of possible clients, are connectable via the Internet 17 and a network connection 18 to a media delivery system 50. The delivery system 50 interacts with the clients 11, 13, 15 and 16 to receive media delivery requests from the clients and to deliver media programs to those clients. The media to be delivered and/or recorded may comprise satellite transmitted television 31a and 31 b of all varieties, cable television feed cables 33, feeds from standard broadcast television and FM signals 35 and other media signal sources 37, such as closed circuit television. In the present embodiment of the signal sources 31-37, convey media programming in a standard format and the media programming is provided at the source on a known time schedule. Media signals from the sources 31-37 are selected on the basis of requests from the clients 11-16 and are delivered by the delivery system 50 to the clients in formats specified by the client. When the delivery system 50 begins to selectively receive media programming, the clients access the media over the Internet 17 and the network connection 18.

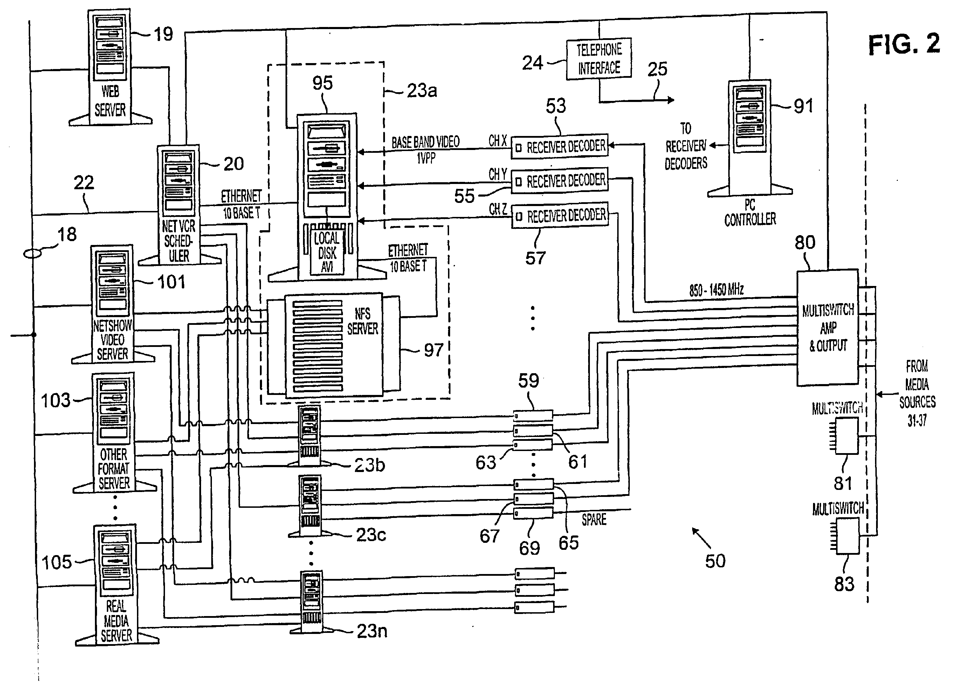

FIG. 2 represents the apparatus employed by a delivery system 50 and includes a request server 19 connected by network connection 18 to the Internet 17. Request server 19 is the initial interface with the client and accordingly, its URL is the "home" - URL of the delivery system. The request server 19 communicates client requests to a scheduler 20 which responds to the requests by overseeing the operations of the delivery system 50 to select specified programming and make it available to the clients. Scheduler 20 maintains current and future information regarding the schedule of media programs available on the various media sources, e.g. 31a-37 and their times of availability. The primary sources of such scheduling information can be accessed via the Internet 17 which is available on connection 22.

When a media program requested by a client is playing or is about to play, scheduler 20 connects the signal source conveying the program to a receiver/decoder such as receiver/decoder 53 which is appropriate for the signal source to produce a standard base band signal of the selected media program. As is shown in FIG. 2, a plurality of receiver/decoders 53-69 is present in the embodiment. For example, if a channel X from satellite 31a is to be made available to a client, e.g. 15, scheduler 20 transmits a connection request to a multiswitch such as multiswitch 80, to connect the source signals from satellite 31a to a specified receiver/decoder, e.g. 55, for signals from that satellite. Multiswitch 80 responds to the request by connecting the signals to the specified receiver/decoder, e.g. 55. At the same time, scheduler 20 sends a receiver/decoder command to a receiver controller 91 specifying that channel X is to be converted by receiver 55 into base band. In the present embodiment, each receiver/decoder, e.g. 55, can produce a base band output signal for one video channel at a time. Accordingly, a delivery system for simultaneous delivery and/or recording of 200 video channels would include at least 200 receivers/decoders. The receiver controller 91 is connected to all of the receivers/decoders 53-69, and transmits to them the necessary parameters to receive and/or decode the signals from the specified source, e.g. 31a, into video base band. The operation of such digitally controlled receivers/decoders is well known and not described in detail.

The video base band output signals of each receiver/decoder, 53-69, are - connected to a predetermined one of a plurality of video digitizers 23 a through 23n. The video digitizers of the present embodiment are 450 MHZ Pentium II NT work stations and which are each connected to three base band video signal inputs from the receiver/decoders. In other embodiments, the digitizers may be less capable and perhaps be connected to only a single receiver/decoder. Similarly, more capable video digitizers may be connected to more than three receiver/decoders.

Each video digitizer comprises a high capacity processor 95 and a high capacity storage device 97, such as the Sun Solaris box storage array 5000. The processor, e.g. 95, receives each of the incoming base band video signals from its connected receiver/decoders, e.g. 53, 55 and 57, and converts each received signal into an uncompressed AVI format. The uncompressed AVI is then converted into a format specified by a client in the original request from the client. The converted video/audio signal is then stored in a file on storage device 97 for replay to the requesting client. It should be mentioned that actions by the processor 95 occur in response to directions from the scheduler 20.

Delivery system 50 also includes a plurality of playback servers of which playback servers 101, 103 and 105 are shown in FIG. 2. Each playback server has one or more Internet addresses and is connected to retrieve stored files from the high capacity stores, e.g. 97, of all of the video digitizers, e.g. 23. The software control of the playback server responds to requests from clients for a particular URL including a file identity by retrieving the video represented by the URL from a predetermined high capacity store and transmitting streaming video derived from the video file to a requesting client. The high capacity store storing each recorded video program is identified to the playback servers 100, 103 and 105 by the scheduler 20 as is the address of the particular file.

Advantageously, the playback to a client occurs in one of the streaming video format which the client can receive. When a client first requests a media program from request server 19, the desired streaming video format is specified with the request. - The scheduler 20, in response to the request information, identifies the requested playback format to the video digitizer selected to record the video program. The video digitizer then converts the compressed AVI of the video program into the requested format before storage in a high capacity store.

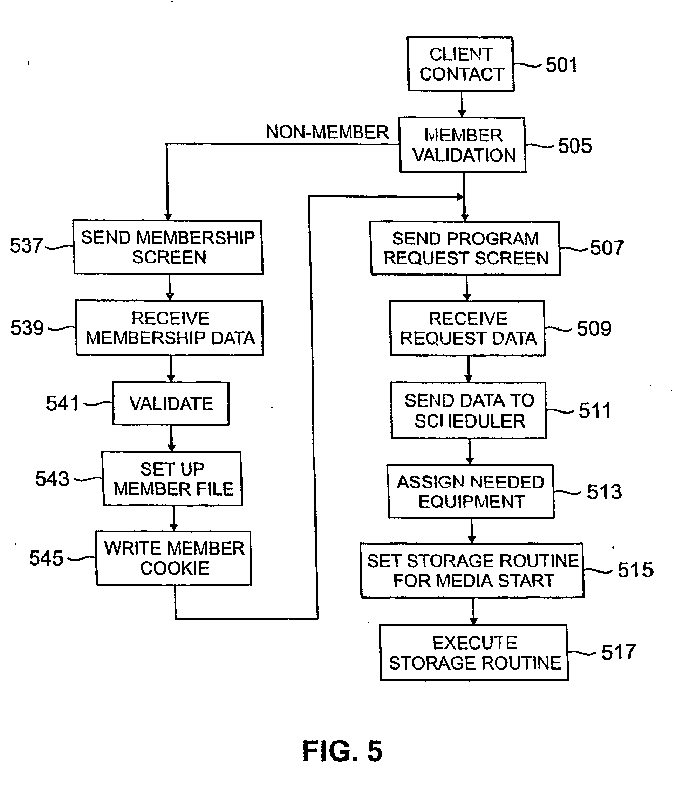

FIGS. 5 - 7 are flow diagrams representing the sequence of interactions between a client, e.g. 15, and the delivery system 50 and the operations of the components of the delivery system performed to deliver a requested media program to the client. Although the emphasis in this description is the delivery of video programs such as television, it must be kept in mind that the media programs delivered may be audio or video and that the video programs may include an audio portion.

In the present embodiment, a client must become a service member prior to making requests for media delivery. Such membership allows the delivery system to record certain default parameters for media delivery and allows the delivery system to establish a method of payment for services, if such is desired. In other embodiments such memberships may not be required and the client may merely contact the request server 19 and request media delivery and/or storage.

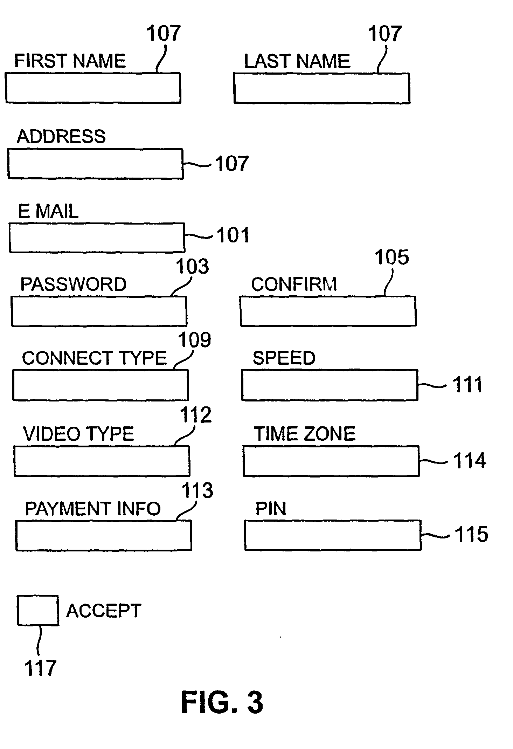

A client, e.g. 15, may contact the request server 19 at any time using a widely distributed URL to the service provider's home page. When a client contacts the request server (step 501 FIG. 5) prior to becoming a member, a step 505 is performed to identify if the client is a non-member and a screen is presented (step 573) to the client asking whether the non-member client would like to become a member. If so, the client is presented with a screen of information boxes as shown in FIG. 3, a portion of which may constitute terms and conditions of membership (not shown). The client, after viewing the terms and conditions, enters his or her name and address into boxes 107 and his or her e-mail address into a text box 107. In the present embodiment a client's e-mail address is used as a log-in name for services, however, other embodiments may include a separate new text box for a separate log-in name. The client then enters in a text box 103 a password for later permission to use the service - and confirms the password by retyping it in a confirmation box 105. The client also enters his or her connect type such as XDSL in a text box 109 and connect speed, e.g. 6 M bps in box 111. The client further specifies in a text box 112 the video format he or she would like to use to receive later requested signals. Lastly, the client enters payment information such as a credit card number in text box 113. After the boxes are filled in, the client clicks on accept button 117 and the information is sent to the request server 19 as membership data validates the data in a step 541 and stores necessary parameters in a client membership file in a step 543. After information validation the request server 19 returns a "thank you new member"screen to the client. The request server also sets a cookie (step 545) on the client computer to show that membership permission has been granted to the client.

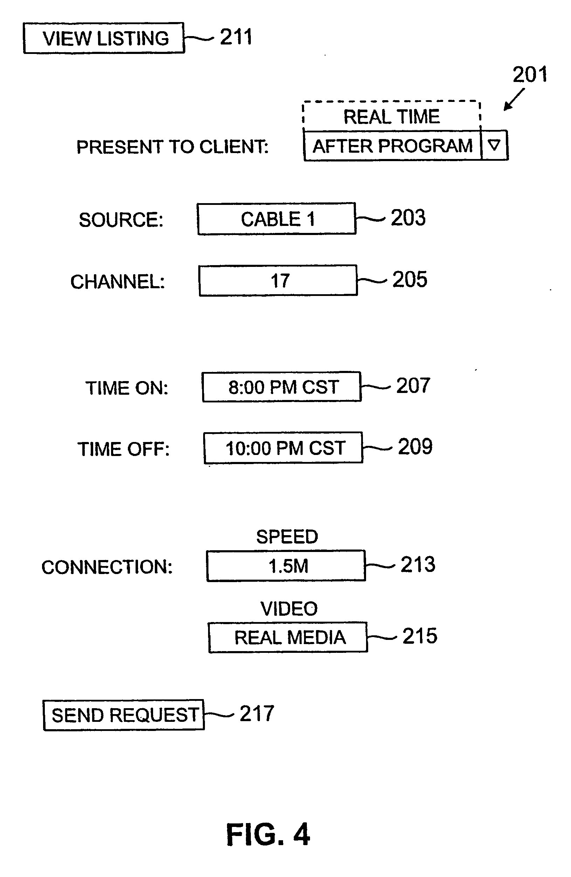

A client who is a member is free to enter the URL of the request server 19 and be connected by the Internet to the request server 19 which will recognize the member status. Upon recognizing that the client is a member by entry of the client's password, and checking the client's cookie, the request server returns a program request screen (step 507 FIG. 5) to the client. Such a request screen, as is shown in FIG. 4, is used by the client to request a specific media program for delivery to the client. In the present example, the client requests in text box 201 that the media program be recorded for later viewing. The client also uses the screen of FIG. 4 to identify the program to be recorded. As shown, the client enters the program source, e.g. cable 1, into text box 203, the channel, e.g. 17, into text box 205, and the time-on and off into text boxes 207 and 209, respectively. As an aid to the client a click button 211 is also provided which, when clicked, requests a program listing to be presented to the client. Finally, if the client wishes to use a different connection speed and streaming video type than that established on the membership form (FIG. 3) such values can be entered into text boxes 213 and 215. At the completion of data entry on the screen of FIG. 4, the client clicks a button 217 and the request data is sent to the request server 19 for use in preparing the requested media program for delivery to the client. -

It should be mentioned that other arrangements for selecting media programs may also be used in other embodiments. For example, the client may be presented with a complete searchable listing of all programs and times available. The client might then merely click on a desired media program and the source, channel and times of the clicked program will be recorded. Further, the program selection might include a printed text with VCR+ numbers or the like relating to the individual receivable programs. In that instance, the client would merely enter the VCR+ number on a screen provided and the delivery system 50 would identify the source and time from that number. Thus, it can be seen that many manners of identifying a media program to the request server are encompassed by the disclosed system. Regardless of the method of program identification, the request server 19 should, after a request is made, have enough information to select the appropriate program from its sources and to properly encode that program for delivery to the client.

In the present example the requested media program is to be stored by the delivery system 50 for later presentation to the client, e.g. 15. Upon receipt of a program storage request in step 509 the request server forwards (step 511) to the scheduler 20 the identity of the program to be stored, the identity (e-mail address) of the requesting client, the data rate of the client and the type of streaming video delivery desired by the client. The scheduler 20 analyzes the information from the request server 19 in a step 513 and schedules the availability of a receiver/decoder, e.g. 53, and video digitizer, e.g. 23a, during the time that reception and storage is to take place. A storage routine is then scheduled in step 515 to execute on the scheduler 20 at a time just prior to the time at which storage is to begin, i.e. just prior to the scheduled start of the requested media program.

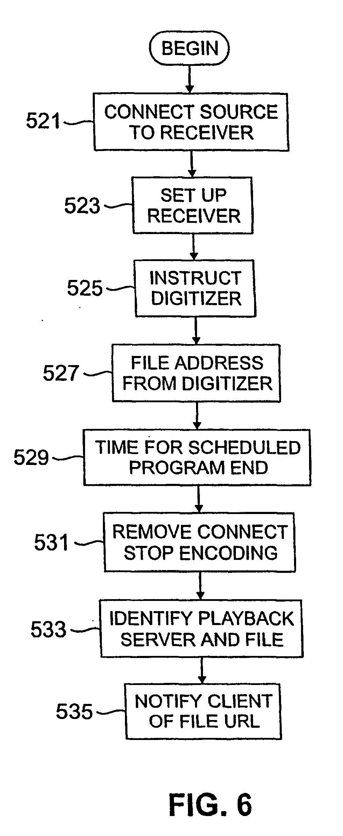

Upon execution, the storage routine (FIG. 6) communicates with the devices scheduled to perform the requested program selection, encoding and storage. Initially, the scheduler 20 in step 521 transmits data to a multiswitch 80 a direction to connect cable 1 to the decoder/receiver, e.g. 53, previously allocated to the scheduler. At - about the same time, scheduler 20 transmits a command in step 523 to controller 91 specifying that it is to control receiver/decoder 53 to convert channel 17 of the signals from cable 1 into baseband. The scheduler 20, as a part of the storage routine, also identifies the client's data rate and streaming media format to the digitizer 23a and directs in step 525 the encoding of base band signals from receiver/decoder 53 into uncompressed AVI and conversion of the result into Real Media. The processor 95 of the digitizer 23a then stores the Real Media data stream as a file on store 97 and identifies the beginning file address to scheduler 20.

The scheduler then begins a timer in step 529 for the storage routine which times out at the scheduled end of the media program being stored. At time out the scheduler directs in step 531 the removal of connections established to receive the requested program and directs the digitizer 23 a to stop the encoding and storage of the program. The storage routine then performs step 533 to identify a playback server, e.g. 105, to transmit the stored media program to the client upon the client's request. In the present example playback server 105 is identified because it provides streaming video in the Real Media format. Upon identifying the playback server 105, the scheduler 20 produces and sends (step 535) an e-mail message back to client 15 which message identifies by URL the identified playback server 105 and the file to be accessed. As an example, the URL might be:
HTTP://www.playbackserver105.com/newrecord
where newrecord identifies the address of the media program file.

The client 15 receives the e-mail from the scheduler and, at a time selected by the client, accesses URL HTTP://www.playbackserver105.com/newrecord. The playback server 105 responds to the URL by accessing the Real Media file stored for client 15 in memory 97 and forwarding that file to client 15 via the Internet.

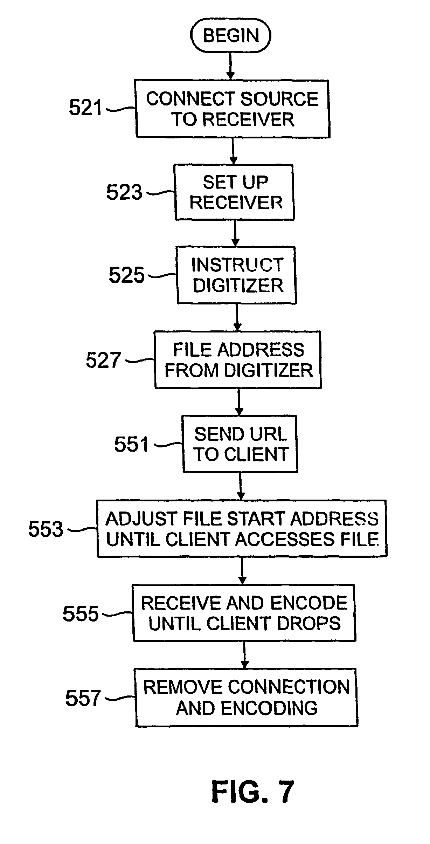

In the preceding example the client selected a media program for storage and delivery after the scheduled end of the media program. The client may also request a substantially real time delivery of a media program to thereby take advantage of the - broad spectrum of available programs from the delivery system. To begin the substantially real time delivery, the client will select "real time" in the "present to viewer" text box of FIG. 4. The remainder of the channel selection and connection data will remain substantially the same as in FIG. 5 with the prior example. That is, the scheduler 20 responds to the client's request by scheduling the recording of a specified program in a high speed store, e.g. 97, in a format requested by the client. The storage routine of FIG. 6 is modified after the performance of step 527. In the substantially real time delivery (FIG. 7) a step 551 is performed after step 527. In step 55, the URL of the stored media file is returned quickly to the client by e-mail so that the client can rapidly access the delivery server. The media program file start address data of the delivery server is continuously updated in a step 553 so that whenever the file reading URL is received from the client the file start address will be separated from the address presently being written by only a brief amount of media program viewing time. The brief amount may range from 0.5 second to 10 minutes so that a client may view the media program with only 0.5 second to 10 minute delay from when it was presented at the media source. The delay interval of 0.5 second to 10 minutes is considered herein to provide substantially real time viewing by the client. When the client drops (step 555) the present connection through the Internet, the scheduler responds in step 557 by deleting the connections and encoding within the delivery system 50.

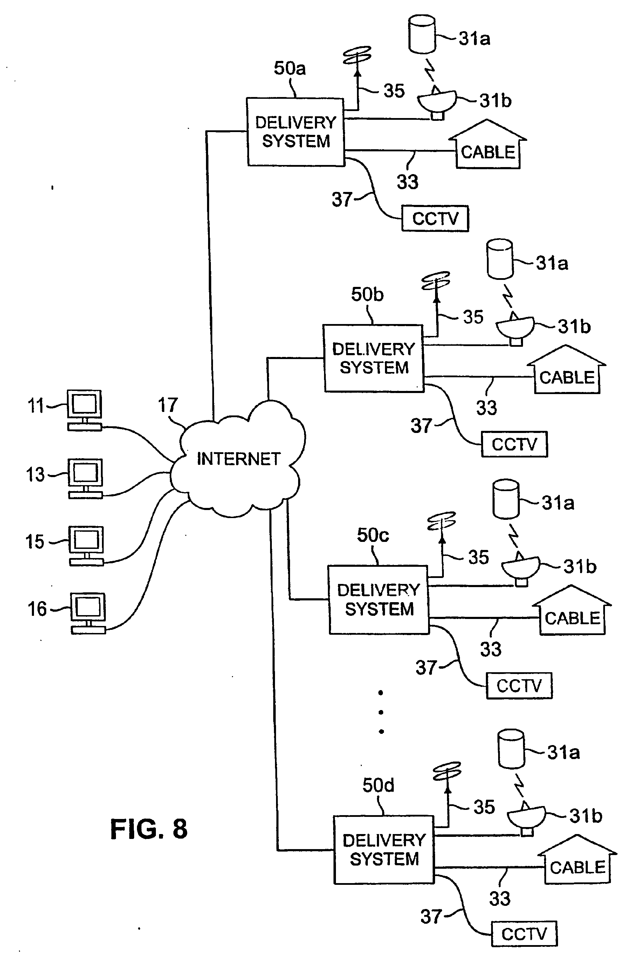

FIG. 1 shows a single delivery system 50 connected by the Internet to many clients. FIG. 8 shows an embodiment in which a plurality of delivery systems, e.g. 50a, 50b, 50c and 50d, which represent a possibly large number of delivery systems, are also shown connected to the clients 11-16 via the Internet. The delivery systems 50a-50d may be widely distributed around the world to give clients access to broadcast multimedia which is available in one region of the world and not in others. Delivery system 50a may be in San Francisco and delivery system 50d may be in Norway. A client in Chicago, for example, can access a delivery system and direct the storage of a San Francisco Forty-Niners football game and a Norwegian hockey match. The - programs will be stored at their respective locations to be accessed via the Internet by the requesting client. In FIG. 8, each of the delivery systems 50a-50d has its own network URL and is substantially the same as the delivery system of FIG. 2. A client, e.g. 15, may direct a request for a multimedia program from delivery system 50a. The request is received by the request server 19 of delivery system 50a, which transmits data representing the request to the associated scheduler 20. Schedulers 20 each maintain a list of the multimedia programs available at the delivery system (50a) containing the scheduler and lists of the multimedia programs available at others of the delivery systems (50b-50d). When a requested program is available at the delivery system receiving the request, the storage and delivery of the program is performed as described with regard to the embodiment of FIG. 1. Alternatively, when the requested program is not available at the delivery system receiving the request, the scheduler 20 identifies which of the delivery systems, e.g. 50d, has access to the requested program. A message is then forwarded via connection 22 and the Internet 17 to a scheduler 20 of the delivery system 50d which has access to the requested program. The scheduler 20, of delivery system 50d, upon receiving the forwarded request, controls the delivery system 50d to store the requested program and notifies the client 15 of the URL at which the program can be accessed.

The preceding description discloses that original client contact with the delivery system is via a digital network such as the Internet. The delivery system may also include a telephone interface 24 for clients which do not want to use a digital network to order the reception and storage of a media program. The telephone interface 24 is connected to the standard telephone network via a connection 25 and includes a microprocessor controlled voice and tone responsive apparatus for receiving and interpreting client telephone signaling. Such voice and tone responsive apparatus is known in the art and not described in detail herein. In order to validate incoming telephone requests, it will first be necessary to assign a login number and a password or pin to the client for telephone ordering. Such login and password or pin will be - presented at the time of membership approval to those clients who desire telephone access.

When a client wishes to request storage or a program via the telephone, he or she places a call using a public phone number to which the telephone network responds by connecting the client to telephone interface 24. Telephone interface 24 responds to the call by presenting announcements, receiving the login and validating pin or password and by validating the client's access. After access is validated, the interface is set to receive directions from the client via DTMF tones or via voice. The client directions specify the particular program to be stored. After the program specifying directions are received, the telephone interface communicates those directions along with the client login to the scheduler 20 which responds thereto in the manner discussed in detail above by controlling the delivery system 50 to store the requested program in a digital format requested by the client at the time of membership. As with the preceding description, the scheduler sends an e-mail to the client's e-mail address advising that the program has been stored and the particular Internet address to use to access the file. The client then accesses the stored program over the Internet using the e-mail provided address.

It is understood that the above described embodiments are merely descriptive of the principles of the invention and that many variations may be devised by those skilled in the art without departing form the scope of the invention. It is intended that such variations be included within the scope of the claims.

## Claims

1. A method of remote media program recording via a computer network **characterized by**:
providing a plurality of broadcast media programs (31, 33, 35, 37);
receiving (501) from a client via the computer network, a request to record a specified broadcast media program for the client;
selecting and storing (517) in digital format the media program specified by the client;
sending to the client, via the computer network a message identifying a computer address from which the stored broadcast media program can be accessed, wherein the sending of the message occurs at substantially the same time that the selecting and storing begins; and
transmitting the stored broadcast media program to the client via the computer network in the format specified during the request receiving, wherein the transmitting occurs while the selecting and storing is occurring so that the specified broadcast media program is delivered to the client substantially in real time.

2. A method in accordance with claim 1 comprising receiving from the client via the computer network, a request for access to the stored broadcast media program which includes the network address of the stored media program.

3. A method in accordance with claim 1 comprising transmitting the stored broadcast media program to the client via the computer network in the delivery format specified during request receiving.

4. A method in accordance with claim 1 wherein the digital format for storing the specified broadcast media program is a format compatible with the delivery format specified during request receiving.

5. A method in accordance with claim 1 wherein the specified delivery format is a streaming video format.

6. A remote program recording and replay system for use over a computer network **characterized by**:
a plurality of media program signals (31, 33, 35, 37) each representing a media program;
a plurality of media delivery devices (101, 103, 105), each media delivery device receiving the plurality of media programs for processing, retention, and distribution;
a server (19) for receiving via the computer network a recording request from a client, the recording request specifying a media program and the server selecting a media delivery device for recording and delivery of the specified media program;
selecting and converting apparatus (53-57, 80, 95) for selecting the specified media program from the plurality of media programs and for converting the selected media program into a digital format;
storage apparatus (97) for storing the selected media program in a digital format provided by the selecting and converting apparatus;
notifying apparatus responsive prior to the completion of storing the specified media program by the storage apparatus for notifying the client of a computer network address specifying one of the media delivery devices and a data file of the storage apparatus storing the specified media program; and
the media delivery device, being responsive to a delivery request including the notified computer network address from the client received via the computer network for transmitting the stored media program to the client via the computer network wherein the transmitting occurs while the specified media program is being selected, converted and stored.

7. A media program recording and replay system in accordance with claim 6 wherein at least one of the plurality of media programs represents a time based broadcast media program and the recording and replay system comprises:
a scheduler which is responsive to a recording request and broadcast time information for selecting a specified media program.

8. A media program recording and replay system in accordance with claim 6 wherein the media program requested by the client is a television broadcast program.

9. A media program recording and replay system in accordance with claim 6 wherein the media program requested by the client is a motion picture.

10. A media program recording and replay system in accordance with claim 7 wherein the system prepares for delivery to a client only media programs or portions of media programs broadcast after the receipt by the web server of the request from a client.

## Patentansprüche

1. Verfahren zur Fernmedienprogrammaufzeichung über ein Computernetzwerk, **gekennzeichnet durch** die folgenden Schritte:
Bereitstellen einer Vielzahl von Ausstrahlungsmedienprogrammen (31, 33, 35, 37);
Empfangen (501) einer Anforderung von einem Kunden, ein spezifiziertes Ausstrahlungsmedienprogramm für den Kunden aufzuzeichnen, über das Computernetzwerk;
Auswählen und Speichern in digitalem Format (517) des **durch** den Kunden spezifizierten Medienprogramms;
Senden einer Nachricht, die eine Computeradresse identifiziert, von der aus auf das gespeicherte Ausstrahlungsmedienprogramm zugegriffen werden kann, zu dem Kunden über das Computernetzwerk, wobei das Senden der Nachricht im wesentlichen zum selben Zeitpunkt wie der Beginn des Auswählens und Speicherns erfolgt; und
Übertragen des gespeicherten Ausstrahlungsmedienprogramms zu dem Kunden über das Computernetzwerk in dem während des Empfangens der Anforderung spezifizierten Format, wobei das Übertragen erfolgt, während das Auswählen und Speichern erfolgt, so daß das spezifizierte Ausstrahlungsmedienprogramm im wesentlichen in Echtzeit an den Kunden abgeliefert wird.

2. Verfahren nach Anspruch 1 mit dem Schritt des Empfangens einer Anforderung des Zugriffs auf das gespeicherte Ausstrahlungsmedienprogramm, die die Netzwerkadresse des gespeicherten Medienprogramms enthält, von dem Kunden über das Computernetzwerk.

3. Verfahren nach Anspruch 1 mit dem Schritt des Übertragens des gespeicherten Ausstrahlungsmedienprogramms zu dem Kunden über das Computernetzwerk in dem während des Empfangens der Anforderung spezifizierten Ablieferformat.

4. Verfahren nach Anspruch 1, wobei das digitale Format zum Speichern des spezifizierten Ausstrahlungsmedienprogramms ein mit dem während des Empfangens der Anforderung spezifizierten Ablieferformat kompatibles Format ist.

5. Verfahren nach Anspruch 1, wobei das spezifizierte Ablieferformat ein Streaming-Videoformat ist.

6. Fernprogrammaufzeichungs- und -wiedergabesystem zur Verwendung über ein Computernetzwerk, **gekennzeichnet durch**
eine Vielzahl von Medienprogrammsignalen (31, 33, 35, 37), die jeweils ein Medienprogramm repräsentieren;
eine Vielzahl von Medienabliefereinrichtungen (101, 103, 105), wobei jede Medienabliefereinrichtung die Vielzahl von Medienprogrammen zum Verarbeiten, Behalten und Verteilen empfängt;
einen Server (19) zum Empfangen einer Aufzeichnungsanforderung von einem Kunden über das Computernetzwerk, wobei die Aufzeichnungsanforderung ein Medienprogramm spezifiziert und der Server eine Medienabliefereinrichtung zum Aufzeichnen und Abliefern des spezifizierten Medienprogramms auswählt;
Auswahl- und Umsetzungsvorrichtungen (53-57, 80, 95) zum Auswählen des spezifizierten Medienprogramms aus der Vielzahl von Medienprogrammen und zum Umsetzen des gewählten Medienprogramms in ein digitales Format;
Speichervorrichtungen (97) zum Speichern des gewählten Medienprogramms in einem **durch** die Auswahl- und Umsetzungsvorrichtungen bereitgestellten digitalen Format;
vor dem Abschluß des Speicherns des spezifizierten Medienprogramms **durch** die Speichervorrichtungen reagierende Benachrichtigungsvorrichtungen zum Benachrichtigen des Kunden über eine Computernetzwerkaddresse, die eine der Medienabliefereinrichtungen spezifiziert, und eine das spezifizierte Medienprogramm speichernde Datei der Speichervorrichtungen; und
die Medienabliefereinrichtung, die auf eine über das Computernetzwerk empfangene die benachrichtigte Computernetzwerkaddresse enthaltende Ablieferanforderung von dem Kunden reagiert, um das gespeicherte Medienprogramm über das Computernetzwerk zu dem Kunden zu übertragen, wobei das Übertragen erfolgt, während das spezifizierte Medienprogramm ausgewählt, umgesetzt und gespeichert wird.

7. Medienprogrammaufzeichungs- und -wiedergabesystem nach Anspruch 6, wobei mindestens eines der Vielzahl von Medienprogrammen ein auf Zeit basierendes Ausstrahlungsmedienprogramm repräsentiert und das Aufzeichungs- und Wiedergabesystem folgendes umfaßt:
eine auf eine Aufzeichnungsanforderung und Ausstrahlungszeitinformationen reagierende Ablaufsteuerung.

8. Medienprogrammaufzeichungs- und -wiedergabesystem nach Anspruch 6, wobei ein vom Kunden angefordertes Medienprogramm ein Fernsehausstrahlungsprogramm ist.

9. Medienprogrammaufzeichungs- und -wiedergabesystem nach Anspruch 6, wobei das vom Kunden angeforderte Medienprogramm ein Spielfilm ist.

10. Medienprogrammaufzeichungs- und -wiedergabesystem nach Anspruch 6, wobei das System nur Medienprogramme oder Teile von Medienprogrammen, die nach dem Empfang einer Anforderung von dem Kunden durch den Webserver ausgestrahlt werden, zur Ablieferung präpariert.

## Revendications

1. Procédé d'enregistrement à distance de programmes multimédia par l'intermédiaire d'un réseau informatique, **caractérisé par** :
la fourniture d'une pluralité de programmes multimédia diffusés (31, 33, 35, 37) ;
la réception (501) depuis un client par l'intermédiaire du réseau informatique, d'une requête d'enregistrement d'un programme multimédia diffusé spécifié pour le client ;
la sélection et la mémorisation (517) en format numérique du programme multimédia spécifié par le client ;
l'envoi au client, par l'intermédiaire du réseau informatique d'un message identifiant une adresse informatique à partir de laquelle le programme multimédia diffusé mémorisé peut être sollicité, dans lequel l'envoi du message se produit sensiblement en même temps que le début de la sélection et de la mémorisation ; et
la transmission du programme multimédia diffusé mémorisé au client par l'intermédiaire du réseau informatique dans le format spécifié à la réception de la requête, dans lequel la transmission se produit pendant que la sélection et la mémorisation ont lieu si bien que le programme multimédia diffusé spécifié est fourni au client sensiblement en temps réel.

2. Procédé selon la revendication 1, comprenant la réception depuis le client par l'intermédiaire du réseau informatique, d'une requête d'accès au programme multimédia diffusé mémorisé qui comporte l'adresse de réseau du programme multimédia mémorisé.

3. Procédé selon la revendication 1, comprenant la transmission du programme multimédia diffusé mémorisé au client par l'intermédiaire du réseau informatique dans le format de livraison spécifié à la réception de la requête.

4. Procédé selon la revendication 1, dans lequel le format numérique de mémorisation du programme multimédia diffusé mémorisé est un format compatible avec le format de livraison spécifié à la réception de la requête.

5. Procédé selon la revendication 1, dans lequel le format de livraison spécifié est un format de vidéo en continu.

6. Système d'enregistrement à distance et de lecture de programmes destiné à être utilisé sur un réseau informatique **caractérisé par** :
une pluralité de signaux de programmes multimédia (31, 33, 35, 37), représentant chacun un programme multimédia ;
une pluralité de dispositifs de distribution multimédia (101, 103, 105), chaque dispositif de distribution multimédia recevant la pluralité de programmes multimédia à traiter, conserver et distribuer ;
un serveur (19) pour recevoir par l'intermédiaire du réseau informatique une requête d'enregistrement depuis un client, la requête d'enregistrement spécifiant un programme multimédia et le serveur sélectionnant un dispositif de distribution multimédia pour l'enregistrement et la distribution du programme multimédia spécifié ;
un appareil de sélection et de conversion (53 à 57, 80, 95) pour sélectionner le programme multimédia spécifié parmi la pluralité de programmes multimédia et pour convertir le programme multimédia sélectionné en un format numérique ;
un appareil de mémorisation (97) pour mémoriser le programme multimédia sélectionné dans un format numérique fourni par l'appareil de sélection et de conversion ;
un appareil de notification répondant avant l'achèvement de la mémorisation du programme multimédia spécifié par l'appareil de mémorisation en notifiant le client d'un réseau informatique de l'adresse spécifiant l'un des dispositifs de distribution multimédia et un fichier de données de l'appareil de mémorisation mémorisant le programme multimédia spécifié ; et
le dispositif de distribution multimédia, répondant à une requête de distribution comportant l'adresse de réseau informatique notifiée du client reçue par l'intermédiaire du réseau informatique pour transmettre le programme multimédia mémorisé au client par l'intermédiaire du réseau informatique où la transmission se produit pendant la sélection, la conversion et la mémorisation du programme multimédia spécifié.

7. Système d'enregistrement et de lecture de programmes multimédia selon la revendication 6, dans lequel au moins l'un de la pluralité de programmes multimédia représente un programme multimédia diffusé selon un horaire et le système d'enregistrement et de lecture comprend :
un ordonnanceur qui répond à une requête d'enregistrement et à des informations d'heure de diffusion pour sélectionner un programme multimédia spécifié.

8. Système d'enregistrement et de lecture de programmes multimédia selon la revendication 6, dans lequel le programme multimédia demandé par le client est un programme télédiffusé.

9. Système d'enregistrement et de lecture de programmes multimédia selon la revendication 6, dans lequel le programme multimédia demandé par le client est un film cinématographique.

10. Système d'enregistrement et de lecture de programmes multimédia selon la revendication 7, dans lequel le système prépare la distribution à un client uniquement de programmes multimédia ou de parties de programmes multimédia diffusés après la réception par le serveur Web de la requête d'un client.
